# EUROPEAN PATENT APPLICATION

(11) **EP 3 725 909 A1**
(43) Date of publication of application: **21.10.2020**
(21) Application number: 20169125.0
(22) Date of filing: 09.04.2020
(51) Int. Cl.: C23C 4/11, C23C 4/134, B22F 5/00, F01D 9/02, F01D 11/12, F23R 3/00

(54) **GEOMETRICALLY SEGMENTED THERMAL BARRIER COATING WITH SPALL INTERRUPTER FEATURES**

(30) Priority: 15.04.2019 US 201916384253
(71) Applicant: Raytheon Technologies Corporation, Farmington, CT 06032 (US)
(72) Inventor: STROCK, Christopher W, Kennebunk, ME 04043 (US); LUTJEN, Paul M, Kennebunkport, ME 04046 (US)
(74) Representative: Dehns

(57) **Abstract**

A method of preventing spallation for a geometrically segmented thermally insulating top coat (54) on an article (30), the method comprising forming a surface feature (52, 152) in a surface (68) of the article (30), forming a crack deflection feature (66) in the surface (68) proximate the surface feature (52, 152), disposing the thermally insulating topcoat (54) over the surface feature (52, 152), and forming segmented portions (56a-e) that are separated by faults (58) extending through the thermally insulating topcoat (54) from the surface feature (52, 152).

## Description

### BACKGROUND

The present disclosure is directed to a method for designing the surface geometry associated with geometrically segmented abradable ceramic (GSAC) thermal barrier coating (TBC) to prevent crack propagation for spallation resistance.

Components that are exposed to high temperatures, such as a component within a gas turbine engine, typically include protective coatings. For example, components such as turbine blades, turbine vanes, blade outer air seals, combustor and compressor components typically include one or more coating layers that function to protect the component from erosion, oxidation, corrosion or the like to thereby enhance component durability and maintain efficient operation of the engine.

As an example, some conventional turbine blade outer air seals include an abradable ceramic coating that contacts tips of the turbine blades such that the blades abrade the coating upon operation of the engine. The abrasion between the outer air seal and the blade tips provide a minimum clearance between these components such that gas flow around the tips of the blades is reduced to thereby maintain engine efficiency. Over time, internal stresses can develop in the protective coating to make the coating vulnerable to cracking and spalling. The outer air seal may then need to be replaced or refurbished after a period of use.

Increasing emphasis on environmental issues and fuel economy continue to drive turbine temperatures up. The higher engine operating temperatures results in an ever increasing severity of the operating environment inside a gas turbine. The severe operating environment results in more coating and base metal distress and increased maintenance costs. For example, more frequent replacement of the outer air seals.

A coating exists called a geometrically segmented abradable ceramic, (GSAC). The GSAC in development has the potential to satisfy the above described needs in many applications, however the most severe service environments still cause the ceramic surface layer of GSAC to spall. There exists a need for a further durability improvement to GSAC coating.

### SUMMARY

In accordance with the present disclosure, there is provided a method of preventing spallation for a geometrically segmented thermally insulating top coat on an article, the method comprising forming a surface feature in the article; forming a crack deflection feature in a surface proximate the surface feature; disposing the thermally insulating topcoat over the surface feature; and forming segmented portions that are separated by faults extending through the thermally insulating topcoat from the surface feature.

In an optional embodiment, the surface comprises a surface of a substrate of the article.

In an optional embodiment, surface comprises a surface of a bond coat applied to a substrate of the article.

In an optional embodiment, the method further comprises altering an inter-splat boundary of the thermally insulating top coat with the crack deflection feature; and deflecting a spallation crack propagating though the thermally insulating top coat.

In an optional embodiment, the method further comprises rotating a ceramic splat structure of the thermally insulating top coat to follow a geometry of the surface proximate the crack deflection feature.

In an optional embodiment, the method further comprises increasing a coating toughness of from 25% to 50% in a direction of crack propagation with the rotated ceramic splat structure of the thermally insulating top coat.

In an optional embodiment, the method further comprises placing the crack deflection feature along a variety of paths across the surface.

In an optional embodiment, the method further comprises deviating the propagation of a spallation crack from a planar path along a thickness of the geometrically segmented thermally insulating top coat.

In an optional embodiment, the method further comprises disposing a bond coat layer onto the article, before disposing the thermally insulating topcoat; and forming the crack deflection feature in the bond coat.

In an optional embodiment, the article is a gas turbine engine component.

In an optional embodiment, the gas turbine engine component is at least one of an airfoil, a platform, a seal, a bulkhead, a fuel nozzle guide, a transition duct and a combustor liner.

In an optional embodiment, the crack deflection feature includes an edge intersection angle.

In an optional embodiment, the edge intersection angle ranges from 90 degrees to 135 degrees.

In accordance with the present disclosure, there is provided a method of interrupting spallation for geometrically segmented coatings on a gas turbine engine component comprising the gas turbine engine component having a surface; forming a surface feature in the surface; forming a crack deflection feature in the surface proximate the surface feature; and disposing a thermally insulating topcoat over the surface feature, forming segmented portions that are separated by faults extending through the thermally insulating topcoat from the surface feature.

In an optional embodiment, the crack deflection feature is selected from the group consisting of a groove, a channel, a trench, and a furrow.

In an optional embodiment, the method further comprises disposing a bond coat layer onto the surface, before disposing the thermally insulating topcoat; and forming the crack deflection feature in the bond coat.

In an optional embodiment, the method further comprises forming the crack deflection feature by at least one of, milling, laser engraving, casting, chemical etching and additive manufacturing.

In an optional embodiment the crack deflection feature includes an edge intersection angle wherein the edge intersection angle ranges from 90 degrees to 135 degrees.

In an optional embodiment the crack deflection feature comprises a bottom having a shape selected from the group consisting of a semi-circle, a vee shape, rectangular with rounded corners and a rectangular shape.

In an optional embodiment, the gas turbine engine component is at least one of an airfoil, a platform (ID or OD shroud of a vane or ID of a blade), a seal, a bulkhead, a fuel nozzle guide, a transition duct and a combustor casing.

Other details of the disclosed features are set forth in the following detailed description and the accompanying drawings wherein like reference numerals depict like elements.

### BRIEF DESCRIPTION OF THE DRAWINGS

FIG. 1 is a schematic representation of an exemplary turbine engine.
FIG. 2 is a turbine section of the turbine engine.
FIG. 3 is an exemplary portion of a turbine article.
FIG. 4 illustrates exemplary geometric surface features of the turbine article.
FIG. 5 illustrates another exemplary geometric surface feature of a turbine article.
FIG. 6 is an exemplary geometric surface feature of a turbine article with crack deflection features.
FIG. 7 is an exemplary geometric surface feature of a turbine article with crack deflection features.
FIG. 8 is an exemplary geometric surface feature of a turbine article with crack deflection features.
FIG. 9 is a cross section from A-A of Fig. 8 of an exemplary geometric surface feature with crack deflection features.
FIG. 10 is a detailed view of the crack deflection feature from the cross section of Fig. 9.
FIG. 11 is a cross sectional view of a crack propagating through coating splats.
FIG. 12 is a cross sectional view of the crack deflection feature and coating splats.

### DETAILED DESCRIPTION

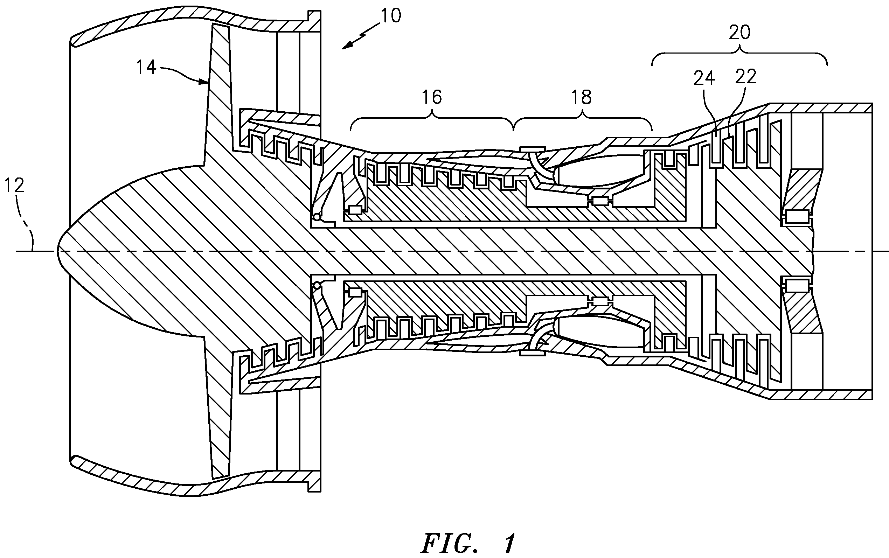

Referring now to the FIG. 1 illustrates selected portions of an exemplary gas turbine engine 10, such as a gas turbine engine 10 used for propulsion. In this example, the gas turbine engine 10 is circumferentially disposed about an engine centerline 12. The engine 10 may include a fan 14, a compressor 16, a combustion section 18, and a turbine section 20 that includes rotating turbine blades 22 and static turbine vanes 24. It is to be understood that other types of engines may also benefit from the examples disclosed herein, such as engines that do not include a fan or engines having other types of compressors, combustors, and turbines.

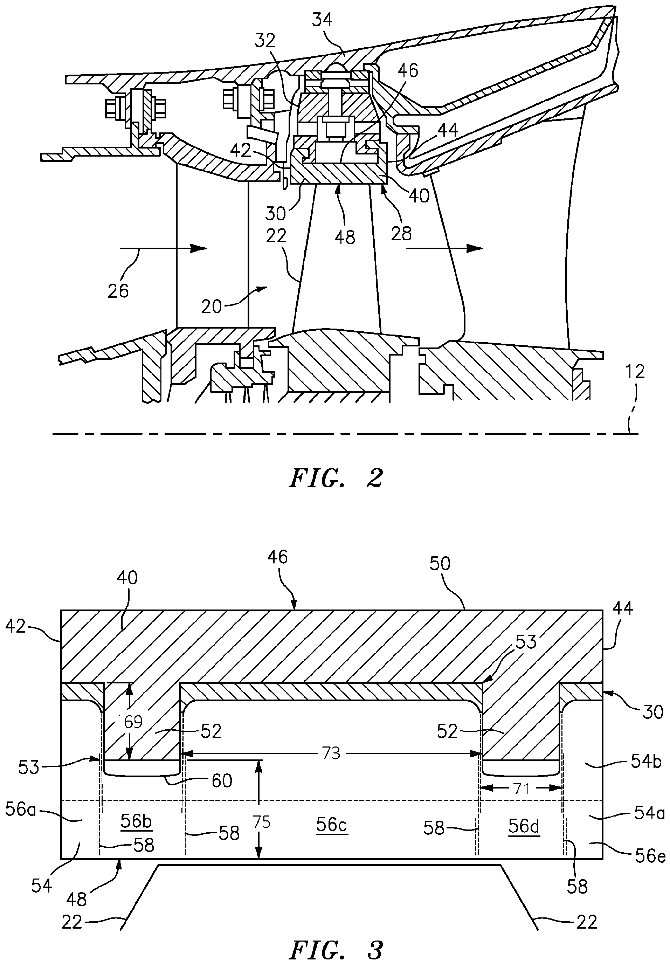

FIG. 2 illustrates selected portions of the turbine section 20. The turbine blades 22 receive a hot gas flow 26 from the combustion section 18 (FIG. 1). The turbine section 20 includes a blade outer air seal system 28, having a plurality of seal members 30, or gas turbine articles, that function as an outer wall for the hot gas flow 26 through the turbine section 20. Each seal member 30 is secured to a support 32, which is in turn secured to a case 34 that generally surrounds the turbine section 20. For example, a plurality of the seal members 30 may be arranged circumferentially about the turbine section 20. It is to be understood that the seal member 30 is only one example of an article in the gas turbine engine and that there may be other articles within the gas turbine engine that may benefit from the examples disclosed herein.

FIG 3. illustrates a portion of seal member 30 having two circumferential sides 40 (one shown), a leading edge 42, a trailing edge 44, a radially outer side 46, and a radially inner side 48 that is adjacent to the hot gas flow path 26. It should be noted that the view in FIG. 3 is a small section of a part cross section. Leading edge 42 and trailing edge 44 do not necessarily have to be leading and trailing edges of the part, but rather the forward and aft edges of the section shown. In an exemplary embodiment, they can represent actual leading and trailing edges. The term "radially" as used in this disclosure relates to the orientation of a particular side with reference to the engine centerline 12 of the gas turbine engine 10.

The seal member 30 includes a substrate 50, a plurality of geometric surface features 52 (hereafter "surface features") that protrude from the substrate 50 on the gas path side of the seal member 30, and a thermally insulating topcoat 54 (e.g., a thermal barrier) disposed over the plurality of surface features 52. It is to be understood that the surface features 52 may not be shown to scale. In an alternative embodiment, the surface features 52 can be recessed into the substrate 50. Moreover, the substrate 50 may include known attachment features for mounting the seal member within the gas turbine engine 10.

The thermally insulating topcoat 54 includes segmented portions 56a-e that are separated by faults 58 extending through the thickness of the thermally insulating topcoat 54 from the plurality of surface features 52. The faults extend from the edges or sides of the surface features 52 and facilitate reducing internal stresses within the thermally insulating topcoat 54 that may occur from sintering of the topcoat material at relatively high surface temperatures within the turbine section 20 during use in the gas turbine engine 10. Depending on the composition of the topcoat 54, surface temperatures of about 2500° F. (1370° C.) and higher may cause sintering. The sintering may result in partial melting, densification, and diffusional shrinkage of the thermally insulating topcoat 54 and thereby induce internal stresses. The faults 58 provide pre-existing locations for releasing energy associated with the internal stresses (e.g., reducing shear and radial stresses). That is, the energy associated with the internal stresses may be dissipated by the faults 58 such that there is less energy available for causing delamination cracking between the thermally insulating topcoat 54 and the underlying substrate 50 or bond coat 60 and spallation.

The faults 58 may vary depending upon the process used to deposit the thermally insulating topcoat 54, for instance. As an example, the faults 58 may be gaps between neighboring segmented portions 56a-e. Alternatively, or in addition to gaps, the faults 58 may be considered to be microstructural discontinuities between neighboring segmented portions 56a-e. For instance, the individual segmented portions 56a-e may include a microstructure having a plurality of grains of the material that makes up the thermally insulating topcoat 54 and there may be a fault line discontinuity between neighboring segmented portions 56a-e. Thus, the faults 58 may be considered to be planes of weakness in the thermally insulating topcoat 54 such that the segmented portions 56a-e can thermally expand and contract without producing a significant amount of stress from restriction by a neighboring segmented portion 56a-e and/or any cracking that does occur in the thermally insulating topcoat 54 from internal stresses is dissipated through propagation of the crack along the faults 58. Thus, the faults 58 facilitate dissipation of internal stress energy within the thermally insulating topcoat 54.

The faults 58 may be produced by using any of a variety of different geometric surface features 52. That is, the pattern and shape of the surface features 52 is not generally limited and may be a grid type of pattern with individual protrusions that extend from the surface of the substrate 50. In any case, the dimensions of each of the plurality of geometric surface features 52 may be designed with a particular ratio of a height 69 of the surface feature 52 to a width 71 of the surface feature 52. For instance, the width 71 is selected such that the bond coat 60 (if used) and thermally insulating topcoat 54 can be built-up onto the tops or tips of the surface feature 52 during the deposition process. Likewise, the height 69 of surface features 52 is selected such that the portion of the thermally insulating topcoat 54 that builds-up on tops of the surface features 52 is discontinuous from other portions of the thermally insulating topcoat 54 that build-up in the valleys, or lower recess portion, between the surface features 52. As will be described with reference to an example fabrication method below, it is this discontinuity or disconnection between the portions of the thermally insulating topcoat 54 on the surface features 52 and between the surface features 52 that produces the fault 58 between the segmented portions 56a-e. In comparison, narrow widths of the surface features in combination with short heights may lead to a continuous over-coating of the thermally insulating topcoat 54 rather than discontinuous portions on the tops of the surface features 52 and in the valleys.

In some examples, the ratio of the width 71 to the height 69 of the surface features 52 is 1-10. In further examples, the ratio may be 5 or less, or even 1-3. In some examples, the minimum height is 0.01 inches (0.254 millimeters) to facilitate building-up the thermally insulating topcoat 54 on the tops of the surface features 52 in a generally uniform thickness.

A spacing 73 between the pluralities of geometric surface features 52 may also be selected to facilitate reducing internal stresses of the thermally insulating topcoat 54. As an example, the spacing 73 between the surface features 52 may be selected with regard to the thickness of the thermally insulating topcoat 54, such as the thickness taken from the top of the surface features 52 or bond coat 60 to the radially inner side 48, as indicated by arrow 75. In some examples, a ratio of the spacing 73 between the surface features 52 to the thickness 76 of a thermally insulating topcoat 54 may be 5 or less. The selected spacing 73 may be smaller than a spacing of cracks that would occur naturally, without the faults 58, which makes the thermally insulating topcoat 54 more resistant to spalling and delamination. Thus, different spacing 73 is appropriate for different thicknesses 76 of the thermally insulating topcoat 54.

The material selected for the substrate 50, bond coat 60 (if used), and thermally insulating topcoat 54 are not necessarily limited to any particular kind. For the seal member 30, the substrate 50 may be a metal alloy, such as a nickel based alloy. The bond coat 60 may include any suitable type of bonding material for attaching the thermally insulating topcoat 54 to the substrate 50. In some embodiments, the bond coat 60 includes a nickel alloy, platinum, gold, silver, or MCrAlY where the M includes at least one of nickel, cobalt, iron, or combination thereof, Cr is chromium, Al is aluminum and Y is yttrium. The bond coat 60 may be approximately 0.005 inches thick (approximately 0.127 millimeters), but may be thicker or thinner depending, for example, on the type of material selected and requirements of a particular application.

The thermally insulating topcoat 54 may be any type of ceramic material suited for providing a desired heat resistance in the gas turbine article. As an example, the thermally insulating topcoat 54 may be an abradable coating, such as yttria stabilized with zirconia, hafnia, and/or gadolinia, gadolinia zirconate, molybdate, alumina, or combinations thereof. The topcoats 54 may also include porosity. While various porosities may be selected, typical porosities in a seal application include 5 to 70% by volume. In the illustrated example, the thermally insulating topcoat 54 includes an abradable layer 54a that extends above the geometric surface features 52. In use, the tips of turbine blades 22 may abrade a groove in the abradable layer 54a such that a post-rub layer 54b (separated by the dotted line parallel to the radially inner side 48) remains between the tips of the turbine blades 22 and the bond coat 60 or tops of the geometric surface features 52. The post-rub layer 54b provides thermal protection of the underlying substrate 50 and geometric surface features 52. In this regard, the thicknesses of the abradable layer 54a and post-rub layer 54b may be designed to meet the needs of a particular application. Given this description, one of ordinary skill in the art will recognize other types of ceramic or even metallic materials that could be used for the thermally insulating topcoat 54.

The faults 58 may be formed during fabrication of the thermally insulating topcoat 54. As an example, a thermal spray process may be used to deposit the thermally insulating topcoat 54 onto the substrate 50 and bond coat 60, if used. The bond coat may be deposited using known deposition methods onto portions of the surface features 52 prior to deposition of the thermally insulating topcoat 54. In this case, the deposition process may be a line-of-sight process such that the sides of the surface features include less bond coat 60 material or are free of any bond coat 60 material. That is, the bond coat 60 may be discontinuous over the surface of the substrate 50. The bond coat 60 may also be deposited in a thickness that is less than the height 69 of the surface features 52 to facilitate avoiding bridging of the bond coat 60 over the surface features 52.

For instance, the thermal spray process may be controlled to deposit the thermally insulating topcoat 54 such that a portion of the thermally insulating topcoat 54 builds-up on the tops of the surface features 52 with relatively sharp corners that have minimal rounding and another portion of the thermally insulating topcoat 54 builds up in the valleys between the surface features 52 discontinuously from the portion on top of the surface features 52 (i.e., no bridging with the topcoat on the surface features 52). That is, the portion on the tops of the surface features 52 is not connected to the portion between the surface features 52. As the build-up of material continues, however, the portion building-up in between the surface features 52 eventually builds up to the tops of the surface features 52 such that the portions between the surface features 52 is laterally adjacent to the portions on the surface features 52. Because of the discontinuity created by the height and width of the surface features 52, the continued build-up of the portions on top of the surface features 52 and between the surface features 52 forms the faults 58 between the segmented portions 56*a-e*. Depending on the parameters of the deposition process, the faults 58 may be gaps between neighboring segmented portions 56a-e or discontinuities in microstructure between the neighboring portions. That is, the portions may be so close together that there is little or no gap therebetween except that there is a discontinuous plane or fault line between the segmented portions 56*a-e*. The radially inner side 48 may thereby be uneven immediately after deposition of the thermally insulating topcoat 54 but may be machined to provide a relatively smooth surface as shown.

In a further example, the process parameters and equipment used in the thermal spray process that may be selected to form the faults 58. For instance, the thermal spray process may utilize a tungsten-lined plasma torch having internal features for facilitating consistent arc root attachment and improved plasma temperature consistency, velocity, particle temperature, and particle trajectory. The nozzle exit diameter may be approximately 0.3125 inches (approximately 8 millimeters), for instance.

Additionally, the plasma spray process may be controlled to project molten droplets of the thermally insulating topcoat 54 material at an angle of 90°+/-5° relative to the top surfaces of the surface features 52 in order to deposit the thermally insulating topcoat 54 with sharp corners that have minimal rounding and without bridging between the portion of the thermally insulating topcoat 54 that builds-up in the valleys between the surface features 52 and the portion on top of the surface features 52. For instance, relative motion between the torch nozzle and the seal member 30 or other type of part may be controlled to maintain the 90°+/-5° angle.

Powder injection into the torch nozzle may also be controlled to achieve a spray plume having a narrow divergence from the 90°+/-5° angle. For instance, the nozzle may include larger powder ports than used in conventional plasma spray processes and a relatively low carrier gas flow rate may be used. The resulting powder injection has increased width across the plasma but a narrow divergence from the 90°+/-5° due to particle size segregation in the direction of injection.

The plasma parameters may also be controlled to achieve desirable particle heating and deposition dynamics and form a strongly bonded thermally insulating topcoat 54. For instance, the plasma parameters may include using 99 standard cubic feet per hour (scfh) of nitrogen, 21 scfh hydrogen, 36 kilowatts at the torch, 12 scfh of carrier gas per port (e.g., nitrogen or argon), two #4 Sulzer Metco powder ports set at 90° relative to each other, and 30 grams per minute of powder per port.

The plurality of geometric surface features 52 may initially be a separate, metal alloy piece that is then attached to the substrate 50, such as in a brazing process. Alternatively, the surface features 52 may be formed with the substrate 50 as a single, unitary piece, e.g., cast. In any case, the geometric surface features 52 may be selected to be any of a variety of different patterns or shapes. As an example, the surface features 52 may be formed as hexagonal walls that define a cell structure therebetween. Alternatively, the walls may be other shapes and need not be continuous.

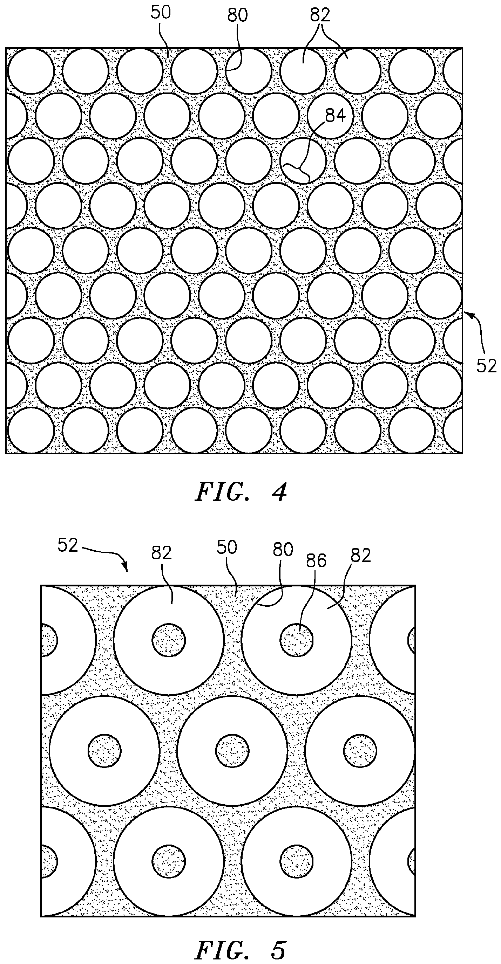

FIG. 4 illustrates an example pattern of the geometric surface features 52 that is constructed in a configuration of a honeycomb having curvilinear walls or sides 80 that form cell structures 82 therebetween. In this case, the curvilinear walls 80 extend from the substrate 50 such that the volume of the cells 82 is cylindrical.

The curvilinear walls 80 in this example are continuously interconnected and form the cells 82 in a hexagonal close packed arrangement. Alternatively, the walls 80 may be provided to make other patterns of the cells 82. Additionally, in the illustrated example, the curvilinear walls 80 have a non-uniform width 84 extending along a length of the wall 80. That is, the wall thickness varies along the length of the wall 80. The variation in the width of the walls 80 provides a natural weak point at the thinnest portion such that if internal stresses build-up within the walls 80, the stresses can be dissipated by crack formation at this thinnest portion.

FIG. 5 illustrates another example pattern of the geometric surface features 52 that also have curvilinear walls 80 and cells 82 defined between the walls 80. In this case, however, each of the cells 82 additionally includes a post 86 that extends upwards from the substrate 50 at least partially through the volume of the cells 82. The posts 86 in this example are generally cylindrical with a circular cross-section. However, other shapes may also be selected, such as but not limited to other geometric shapes. The posts 86 may provide additional faults 58 within the thermally insulating topcoat 54 for a greater degree of segmentation.

The surface feature 52 forming process is selected to produce edges or sharp corners 53. Sharp corners at both the top and bottom of the GSAC divots are necessary for producing the necessary coating segmentation structure 56. In an exemplary embodiment, the sharp corners 53 can be defined by the sum of the two radii less than or equal to 50 percent of the surface feature 52 height/depth. In another exemplary embodiment, the process can form sharp corners and/or rounded corners to any degree or combination as necessary to produce the coating segmentation structure 52.

The geometric surface features 52 may be selected to be any of a variety of different patterns or shapes. As an example, the surface features 52 may be formed as hexagonal walls that define a cell structure therebetween. Alternatively, the walls may be other shapes and need not be continuous.

Varying surface feature diameter will help to maintain design criteria for the desired ratios of coating thickness to surface feature diameter, depth and inter-divot spacing.

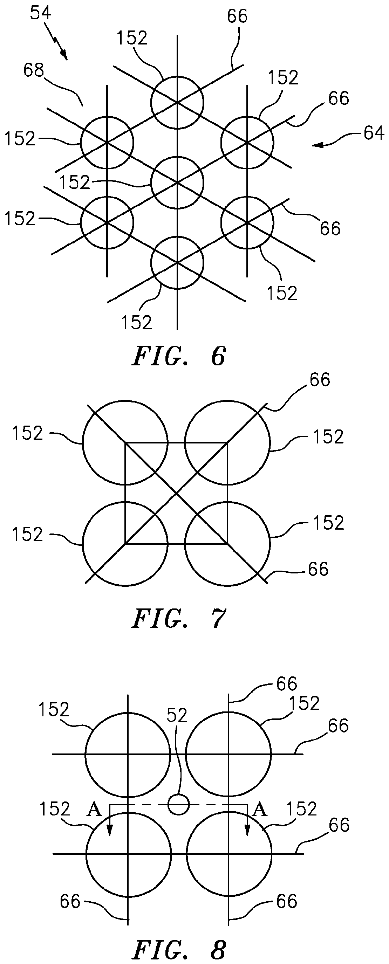

FIG. 6, and FIG. 7 illustrate an exemplary embodiment of the surface features shaped as divots 152 that are recessed into the substrate 50 in a pattern 64. A crack deflection feature 66 can be formed in a surface 68 proximate the divots 152. The surface 68 can be in the substrate 50, the bond coat 60, or any other surface 68 of the substrate under the top coat 54. In an exemplary embodiment, the crack deflection feature 66 can be formed as a groove, or channel, trench, furrow or other feature within the surface 68. The crack deflection feature 66 can be placed along a variety of paths across the surface 68. The crack deflection feature 66 can be formed by additive or subtractive processes.

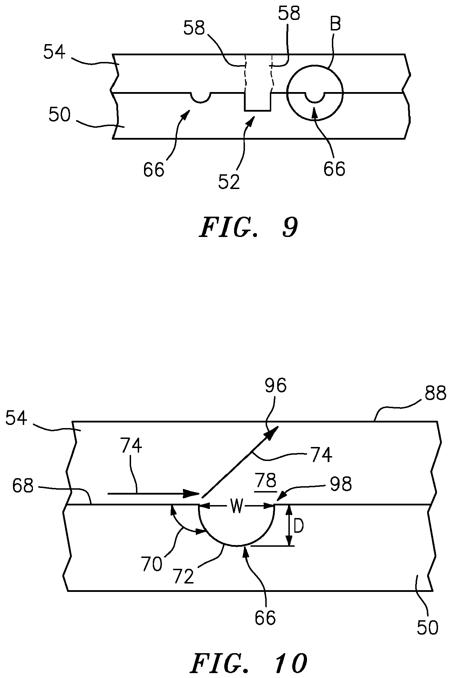

In an alternative embodiment, at Fig. 8, shows a group of divots 152 in a pattern 64. The crack deflection features 66 are extended through the center of the divots 152. Fig. 9 shows the cross sectional view of the cut A-A shown in Fig. 8. The surface feature 52 is shown formed in the substrate 50. The top coat 54 is shown with a pair of faults 58 formed in the top coat 54 proximate the surface feature 52. The crack deflection features 66 are shown on each side of the surface feature 52. In an alternative embodiment, the crack deflection feature 66 can be formed in the bond coat 60 proximate to the top coat 54.

Fig. 10 shows a detailed view of the crack deflection feature 66 shown at B of Fig. 9. The crack deflection feature 66 includes an edge intersection angle 70. In an exemplary embodiment, the edge intersection angle 70 can range from about 90 degrees and 135 degrees. The crack deflection feature 66 can be formed with the edge intersection angle 70 relative to the substrate 50 (shown) or to the bond coat 60. A bottom 72 of the crack deflection feature 66 can have a variety of shapes, such as a semi-circle (shown), V vee shape, rectangular shape, rectangular shape with rounded corners, and the like. In an exemplary embodiment, the crack deflection feature 66 can have a width W and/or depth D of between 5 mils and 25 mils (0.127mm and 0.635mm). The crack deflection feature 66 can be formed from at least one of, milling, laser engraving, casting, chemical etching and additive manufacturing.

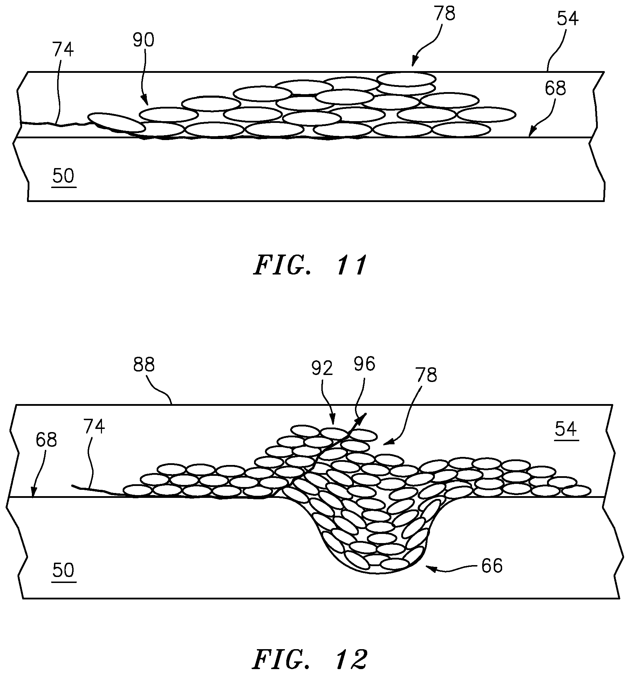

Referring also to FIG. 11 the cross sectional schematic shows the propagation of a crack 74 along the surface 68 of the substrate 50. The crack 74 propagates along the boundary of the splat structure 78 and the substrate 50. The crack 74 propagation results in the spallation of the top coat 54 from the substrate 50.

Referring also to FIG. 12, the crack deflection feature 66 is configured to deviate the propagation of a crack 74, such as a spallation crack, from a planar path along the thickness of the substrate 50 and/or the top coat 54, shown in FIG. 11. The spallation crack 74 tends to propagate in the top coat 54 just above the bond coat 60, or substrate surface 68. In an exemplary embodiment, when the crack 74 approaches the crack deflection feature 66, a ceramic splat structure 78 of the top coat 54 turns to follow the underlying geometry of the surface 68. The rotated splat structure 78 provides an increased coating toughness in the direction of propagation on the order of 25% to 50%. The crack deflection feature 66 helps to arrest the crack 74. The tip 96 of the crack 74 proximate the location of the crack deflection feature 66 is located further from the bond coat 60 or substrate 50 where the stress levels are reduced. The crack deflection feature 66 influences the inter-splat boundary 92, that is, the boundaries between each splat structure 78. The inter-splat boundary 92 is changed to no longer lie along the surface 68 of the substrate 50 (bond coat 60) but instead rolls up or rotates upwardly away from the surface 68. The alteration of the inter-splat boundary 92 results in an alteration of the surface 68 to top coat 54 boundary. As the crack 74 propagates along the inter-splat boundary 92, the crack 74 is turned away from the surface 68 and toward the surface of the topcoat 88. The crack deflection feature 66 helps to bias the inter-splat boundary 92 which, in turn, influences the direction of propagation the crack 74 will follow.

In an exemplary embodiment, the rotation of the splat structure 78 can be influenced by dimensions of the crack deflection feature 66, such as the edge intersection angle 70 being from about 210 degrees to 270 degrees. In an alternative embodiment, the edge intersection angle 70 can be formed from about 225 degrees to about 250 degrees. In another exemplary embodiment, a corner 98 of the crack deflection feature 66 can have a radius, of from about <0.020 inch (<0.508mm) and preferably <0.010 inch (<0.254mm) radius.

Alternatively, the radius could be defined as a fraction of a coating 54 thickness. The corner 98 radius can also be defined as <50% of the top coat 54 thickness. By combining the angle and radius criteria at the corner 98, the minimum size of the crack deflection feature 66 can be determined. The radius and angle criteria can applied to the last layer before application of the top coat 54 (after bond coat 60).

The effects of the crack deflection feature 66 along with the splat structure 78 combines to encourage deflection of the spallation crack 74 toward the surface 88 of the top coat 54 and stop the propagation of the crack 74.

The disclosed crack deflection feature improves the durability of geometrically segmented abradable ceramic (GSAC) thermal barrier coating. The crack deflection feature of the GSAC can cause deflection of cracks to help slow spallation.

This will improve the durability of air plasma sprayed TBC or permit operation at higher temperature or with lower cooling air flow rate. Accordingly, it is intended to embrace those alternatives, modifications, and variations which fall within the broad scope of the appended claims.

## Claims

1. A method of preventing spallation for a geometrically segmented thermally insulating top coat (54) on an article (30), the method comprising:
forming a surface feature (52, 152) in said article (30);
forming a crack deflection feature (66) in a surface (68) proximate said surface feature (52, 152);
disposing said thermally insulating topcoat (54) over said surface feature (52, 152); and
forming segmented portions (56a-e) that are separated by faults (58) extending through the thermally insulating topcoat (54) from said surface feature (52, 152).

2. The method of claim 1, wherein said surface (68) comprises a surface of a substrate (50) of said article (30).

3. The method of claim 1, wherein said surface (68) comprises a surface of a bond coat (60) applied to a substrate (50) of said article (30).

4. The method of claim 1, 2 or 3, further comprising:
altering a boundary between said surface (68) and said thermally insulating top coat (54) with said crack deflection feature (66); and
deflecting a spallation crack (74) propagating though said thermally insulating top coat (54).

5. The method of any preceding claim, further comprising:
rotating a ceramic splat structure (78) of the thermally insulating top coat (54) to follow a geometry of the surface (68) proximate the crack deflection feature (66); and, optionally,
increasing a coating toughness of from 25% to 50% in a direction of crack propagation with said rotated ceramic splat structure (78) of the thermally insulating top coat (54).

6. The method of any preceding claim, further comprising:
placing said crack deflection feature (66) along a variety of paths across said surface (68).

7. The method of any preceding claim, further comprising:
deviating the propagation of a spallation crack (74) from a planar path along a thickness (76) of the geometrically segmented thermally insulating top coat (54).

8. The method of any preceding claim, further comprising:
disposing a bond coat layer (60) onto the article (30), before disposing said thermally insulating topcoat (54); and
forming said crack deflection feature (66) in said bond coat (60).

9. The method of any preceding claim, wherein said article (30) is a gas turbine engine component, and, optionally, said gas turbine engine component is at least one of an airfoil, a platform, a seal, a bulkhead, a fuel nozzle guide, a transition duct and a combustor liner.

10. A method of interrupting spallation for geometrically segmented coatings on a gas turbine engine component (30) comprising:
said gas turbine engine component (30) having a surface (68) ;
forming a surface feature (52, 152) in said surface (68);
forming a crack deflection feature (66) in said surface (68) proximate said surface feature (52, 152); and
disposing a thermally insulating topcoat (54) over said surface feature (52, 152), forming segmented portions (56a-e) that are separated by faults (58) extending through the thermally insulating topcoat (54) from said surface feature (52, 152).

11. The method of claim 10, wherein:
said crack deflection feature (66) is selected from the group consisting of a groove, a channel, a trench, and a furrow; and/or
said crack deflection feature (66) comprises a bottom (72) having a shape selected from the group consisting of a semi-circle, a vee shape, and a rectangular shape.

12. The method of claim 10 or 11, further comprising:
disposing a bond coat layer (60) onto the surface (68), before disposing said thermally insulating topcoat (54); and
forming said crack deflection feature (66) in said bond coat (60).

13. The method of claim 10, 11 or 12, further comprising:
forming said crack deflection feature (66) from at least one of, milling, laser engraving, casting, chemical etching and additive manufacturing.

14. The method of any of claims 10 to 13, wherein said gas turbine engine component (30) is at least one of an airfoil, a platform, a seal, a bulkhead, a fuel nozzle guide, a transition duct and a combustor liner.

15. The method of any preceding claim, wherein said crack deflection feature (66) includes an edge intersection angle (70), and, optionally, the edge intersection angle (70) ranges from 90 degrees to 135 degrees.
